# EUROPEAN PATENT APPLICATION

(11) **EP 2 924 871 A1**
(43) Date of publication of application: **30.09.2015**
(21) Application number: 12888720.5
(22) Date of filing: 20.11.2012
(51) Int. Cl.: H02P 21/00, H02P 27/04, H02P 29/00

(54) **MOTOR DRIVE SYSTEM AND MOTOR CONTROL DEVICE**

(71) Applicant: Kabushiki Kaisha Yaskawa Denki, Kitakyushu-shi, Fukuoka 806-0004 (JP)
(72) Inventor: TAKASE, Yoshiyasu, Kitakyushu-shi Fukuoka 806-0004 (JP); NAKAMURA, Hiroshi, Kitakyushu-shi Fukuoka 806-0004 (JP); KUBOTA, Yoshiaki, Kitakyushu-shi Fukuoka 806-0004 (JP); MAMBA, Takashi, Kitakyushu-shi Fukuoka 806-0004 (JP)
(74) Representative: Grünecker Patent- und Rechtsanwälte PartG mbB
(86) International application number: PCT/JP2012/080092
(87) International publication number: WO 2014/080456

(57) **Abstract**

Provided is a motor drive system having an excellent environment resistance and being constructible at a low cost and a motor control device used therein. There is provided a motor, a torque sensor provided between the motor and a load, and the motor control device that controls driving of the motor. The motor control device is provided with an estimation unit that estimates at least either of a speed or a position of the motor based on a torque detection signal detected by the torque sensor.

## Description

### Technical Field

Disclosed embodiments relate to a motor drive system and a motor control device.

### Background Art

Conventionally, in a system provided with a motor, in a case where drive control is performed on the motor, a position and a speed (a rotational angle and a rotational speed) of the motor are generally detected by using a position sensor such as an encoder (see, for example, Patent Literature 1).

### Citation List

### Patent Literature

Patent Literature 1: JP 2009-095154 A

### Summary of Invention

### Technical Problem

However, the position sensor such as the encoder is costly and is slightly problematic in terms of environment resistance such as vibration and shock. On the other hand, in recent years, there has been known a system using a so-called encoder-less motor that obtains a position and a speed of the motor from a voltage and an electric current of the motor; however, it may not be capable of sufficiently compensating a torque ripple.

One aspect of an embodiment has been made in view of the above, and an objective thereof is to provide a motor drive system and a motor control device having excellent environment resistance and being constructible at a low cost.

### Solution to Problem

A motor drive system according to one aspect of an embodiment includes: a motor; a torque sensor provided between the motor and a load; and a motor control device configured to control driving of the motor. The motor control device includes an estimation unit configured to estimate at least either of a speed or a position of the motor based on a torque detection signal detected by the torque sensor.

### Advantageous Effects of Invention

According to one aspect of the embodiment, it is possible to realize the motor drive system and the motor control device having the excellent environment resistance and being capable of improving operational performance at a low cost.

### Brief Description of Drawings

FIG. 1 is an explanatory diagram illustrating one example of a robot to which a motor drive system according to an embodiment is applied.
FIG. 2A is a block diagram illustrating one example of the motor drive system.
FIG. 2B is a block diagram illustrating another example of the motor drive system.
FIG. 3 is an explanatory diagram illustrating a motor control device according to the embodiment.
FIG. 4 is an explanatory diagram illustrating a modification of a motor control device.
FIG. 5 is an explanatory diagram illustrating a principle of an estimation function by an estimation unit provided to the motor control device.
FIG. 6 is an explanatory diagram illustrating the principle of the estimation function by the estimation unit.
FIG. 7 is an explanatory diagram illustrating a motor drive system according to another embodiment.
FIG. 8A is an explanatory diagram illustrating a torque sensor according to the embodiment in a front view.
FIG. 8B is a sectional view along line I-I in FIG. 8A.
FIG. 9A is an explanatory diagram illustrating one example of an attachment state of a strain gage to the torque sensor.
FIG. 9B is an explanatory diagram illustrating a bridge circuit assembled by the strain gage.
FIG. 10A is an explanatory diagram illustrating another example of the attachment state of the strain gage to the torque sensor.
FIG. 10B is an explanatory diagram illustrating a bridge circuit assembled by the strain gage.

### Description of Embodiments

Hereinafter, embodiments of a motor drive system and a motor control device disclosed in the present application are described in detail with reference to the drawings. Note that the present invention is not to be limited by the embodiments described below.

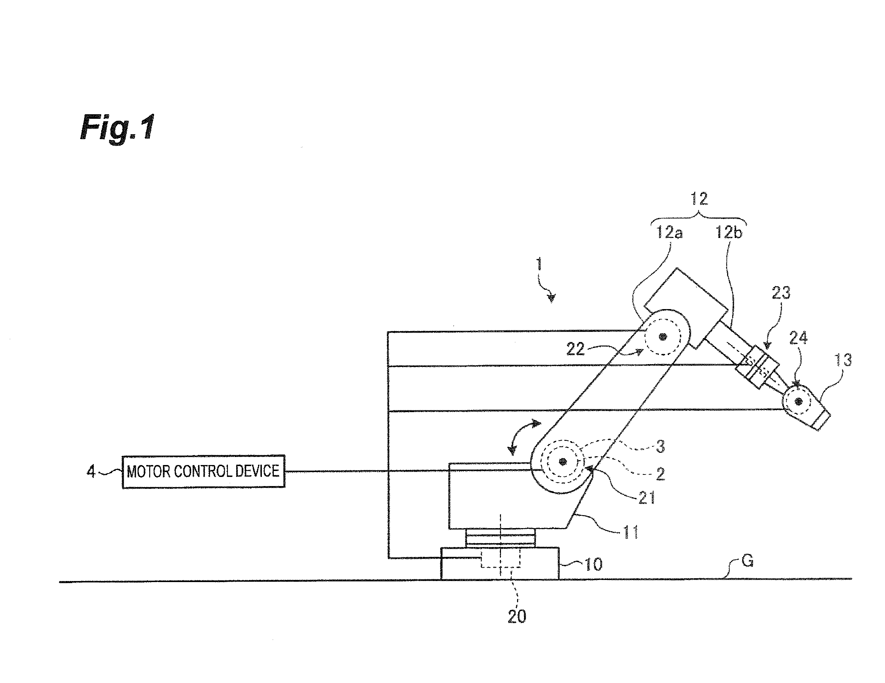

FIG. 1 is an explanatory diagram illustrating one example of a robot 1 to which a motor drive system according to an embodiment is applied. Hereinafter, a direction substantially vertical to an installation surface G, on which the robot 1 is installed, may be referred to as a vertical direction.

As illustrated, the robot 1 is provided with a body unit 11 attached through a turning unit 20 to be freely turnable in a horizontal direction to a base 10, which is fixedly installed on the installation surface G, an arm unit 12 interlockingly connected to the body unit 11, and a wrist unit 13 provided to a tip of the arm unit 12. At the tip of the wrist unit 13, an end effector (not illustrated) is connected as appropriate according to purposes.

Note that each of the arm unit 12 and the wrist unit 13 is configured to be freely rotatable around a shaft through first to fourth joint units 21 to 24. The arm unit 12 is provided with a first arm unit 12a, which is connected to the body unit 11 to be freely swingable vertically through the first joint unit 21, and a second arm unit 12b, which is connected to a tip portion of the first arm unit 12a to be freely swingable vertically through the second joint unit 22.

The wrist unit 13 is connected to the second arm unit 12b to be freely rotatable around the shaft through the third joint unit 23 and to be freely swingable vertically through the fourth joint unit 24.

The turning unit 20 as well as the first to fourth joint units 21 to 24 incorporate an actuator for driving the body unit 11, the arm unit 12, and the wrist unit 13, which are movable members. The robot 1 according to this embodiment is provided with a motor 2 and a torque sensor 3 as the actuator. Then, as illustrated, the motor 2 and the torque sensor 3 are electrically connected with a motor control device 4 that controls driving of the motor 2.

Here, the motor control device 4 is described as well as the motor drive system provided with the motor control device 4 is specifically described.

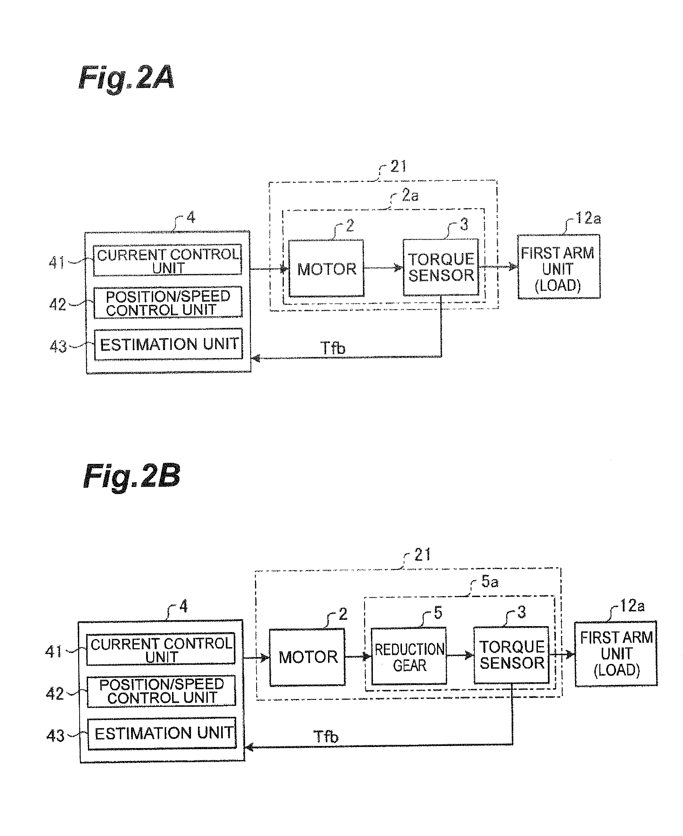

FIG. 2A is a block diagram illustrating one example of the motor drive system. For example, when the motor drive system is applied to the first joint unit 21, as illustrated, the first joint unit 21 is provided with the motor 2, which serves as a driving source for driving the first arm unit 12a, and the torque sensor 3, which detects torque when the motor 2 is driving.

The torque sensor 3 is provided between the motor 2 and the first arm unit 12a, which is one example of the movable members and a load of the motor 2. Here, an example is illustrated in which the motor 2 and the torque sensor 3 are integrally constituted, and a sensor-integrated type motor 2a is provided in which the torque sensor 3 is integrally incorporated into the motor 2.

FIG. 2B is a block diagram illustrating another example of the motor drive system. As illustrated, the first joint unit 21 is provided with the motor 2 and a sensor-integrated type reduction gear 5a integrally constituted of a reduction gear 5, which is interlockingly connected to the motor 2, and the torque sensor 3.

That is, to the first joint unit 21 of the robot 1 illustrated in FIG. 1, the sensor-integrated type motor 2a or the motor 2 with the sensor-integrated type reduction gear 5a is arranged, whereby the first arm unit 12a is swung. Although illustration is omitted, note that it is also possible to employ a sensor-integrated type actuator integrally constituted of the motor 2, the reduction gear 5, and the torque sensor 3 in place of the sensor-integrated type motor 2a not provided with the reduction gear 5 or the sensor-integrated type reduction gear 5a being a separate body from the motor 2.

As illustrated in FIGS. 2A and 2B, the motor control device 4, which controls the driving of the motor 2, is provided with a current control unit 41, a position/speed control unit 42, and an estimation unit 43.

The estimation unit 43 estimates either of a speed or a position of the motor 2 based on a torque detection signal T_{fb} fed back from the torque sensor 3 and outputs a mechanical angular velocity, which is an estimation result, to the position/speed control unit 42 or an estimated electric angle to the current control unit 41. Based on the mechanical angular velocity and a speed command from the estimation unit 43, the position/speed control unit 42 outputs a current command to the current control unit 41. Accordingly, the current control unit 41 controls the motor 2 based on a feedback electric current I_{fb}, which is a signal obtained by detecting an output current to be supplied to the motor 2 by a current detector, the estimated electric angle of the motor 2 from the estimation unit 43, and the current command from the position/speed control unit 42. Details will be described below.

In this way, the motor control device 4 according to this embodiment performs control of the motor 2 by using the torque sensor 3 having an excellent environment resistance without using, for example, a position detector such as an encoder, which is costly and is problematic in terms of environment resistance such as vibration and shock. Therefore, it is possible to realize a motor drive system and the motor control device 4 that are low-cost and capable of improving operational performance.

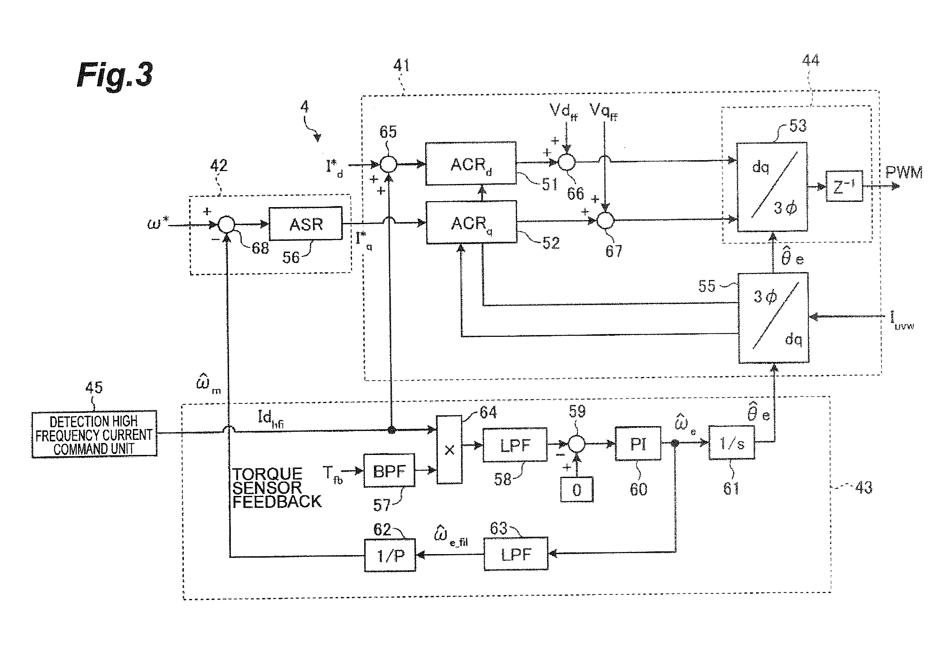

Here, the motor control device 4 is described more specifically. FIG. 3 is an explanatory diagram more specifically illustrating the motor control device 4.

As illustrated, the motor control device 4 is provided with a high frequency current command unit 45 that generates a high frequency current command Id_{hfi} to be superimposed on the output current to the motor 2. That is, the estimation unit 43 of the motor control device 4 estimates at least either of the speed or the position of the motor 2 based on the high frequency current command Id_{hfi} and the torque detection signal T_{fb}. Note that it is not always necessary that the high frequency current command unit 45 be provided to the motor control device 4, and it is also possible to provide it as an external device separate from the motor control device 4.

The current control unit 41 is provided with an ACR_{d} (d-axis current controller) 51, an ACR_{q} (q-axis current controller) 52, a three-phase/dq coordinate converter 55, a d-axis current calculator 65, adders 66 and 67, and a dq/three-phase coordinate converter 44. The three-phase/dq coordinate converter 55 is a coordinate conversion unit provided to the motor control device 4. It calculates a d-axis component and a q-axis component of a d-q axes rotating coordinate system, which is synchronized with the motor 2, and derives a d-axis current and a q-axis current for each of three phases of currents I_{uvw} from the motor 2. The dq/three-phase coordinate converter 44 is provided with a dq coordinate conversion unit 53 and derives a three-phase voltage command V_{uvw} from a d-axis voltage command V_{d} and a q-axis voltage command V_{q}.

The current control unit 41 is also provided with a PWM controller, a switching element (power element), and a current detector that are not illustrated. The PWM controller, by performing a so-callect carrier comparison calculation and space vector calculation, converts a three-phase voltage command into a PWM control signal and outputs it to the switching element (power element). The switching element (power element) is, for example, an intelligent power module (IPM), and it supplies an electric current corresponding to the PWM control signal from the PWM controller to the motor. The current detector is disposed to a current supply line to the motor, and it outputs a detected current signal Iuvw.

The ACRd 51 adjusts and outputs a d-axis voltage command based on a command constituted of the detection high frequency current command Id_{hfi} from the high frequency current command unit 45 and a d-axis current command I^{*}_{d}, which are synthesized by the d-axis current calculator 65, and a d-axis current value Id output from the three-phase/dq coordinate converter 55. Note that the ACR_{d} 51 adjusts the d-axis voltage command such that a deviation of the d-axis current command I^{*}_{d} from the d-axis current value, which is input through the three-phase/dq coordinate converter 55, is zero. The d-axis voltage command that has been output is synthesized with a d-axis compensation voltage Vd_{ff} by the adder 66 and is input to the dq coordinate conversion unit 53 of a PMW controller 44.

Based on a q-axis current command I^{*}q from the position/speed control unit 42 and a q-axis current value Iq output from the three-phase/dq coordinate converter 55, the ACRq 52 adjusts and outputs a q-axis voltage command. The q-axis voltage command that has been output is synthesized with a q-axis compensation voltage Vq_{ff} by the adder 67 and is input to the dq coordinate conversion unit 53 of the PMW controller 44.

The position/speed control unit 42 is provided with a subtracter 68 that obtains a deviation by comparing a speed command ω* with an estimated mechanical angular velocity ω^ₘ, which is a mechanical angular velocity from the estimation unit 43, and an automatic speed regulator (ASR) 56 that outputs the q-axis current command I*q to the ACR_{q} 52 of the current control unit 41.

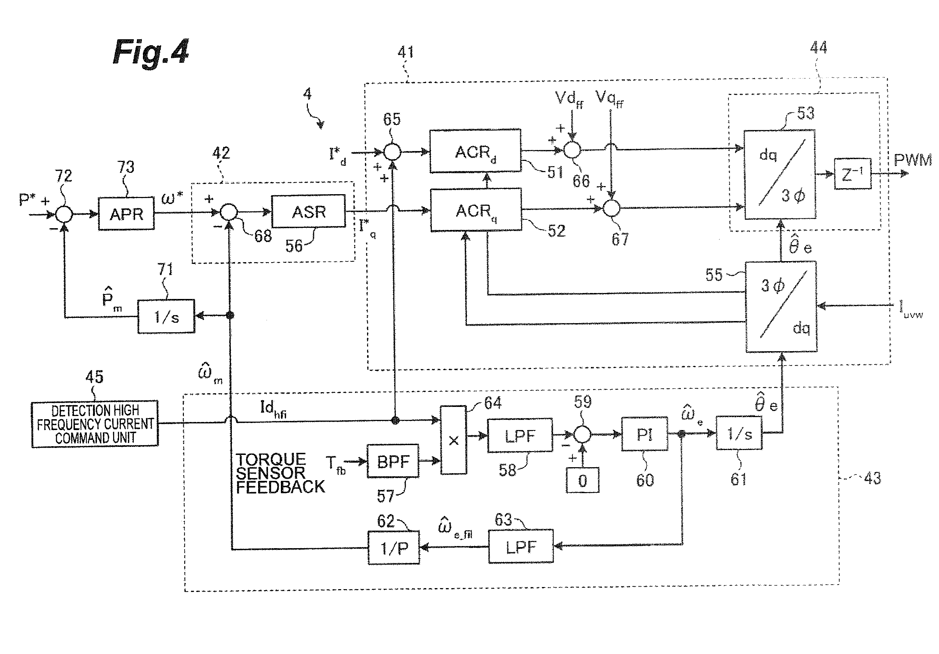

Here, the embodiment illustrated in FIG. 3 is a case where the motor control device 4 performs speed control of the motor 2. On the other hand, in a case where the motor control device 4 performs position control of the motor 2, as illustrated in FIG. 4, preferably it is configured to further include an integrator 71, a subtracter 72, and an automatic position regulator (APR) 73. The integrator 71 outputs an estimated mechanical angle P^ₘ by integrating the estimated mechanical angular velocity ω^ₘ, which is the mechanical angular velocity from the estimation unit 43. The subtracter 72 obtains a deviation by comparing a position command P* with the estimated mechanical angle P^ₘ. The automatic position regulator (APR) 73 outputs the speed command ω* to the automatic speed regulator (ASR) 56. Note that FIG. 4 is an explanatory diagram illustrating a modification of the motor control device having the same configuration as the one illustrated in FIG. 3 other than that it is provided with the integrator 71, the subtracter 72, and the automatic position regulator (APR) 73. It is also possible to provide the integrator 71 inside the estimation unit 43. Accordingly, the estimation unit 43 becomes capable of estimating at least either of the speed or the position of the motor.

The estimation unit 43 is provided with a bandpass filter (BPF) 57, a multiplier 64, low pass filters (LPF) 58 and 63, a subtracter 59, a PI controller 60, an integrator 61, and a mechanical angle calculation unit 62.

The multiplier 64 multiplies the torque detection signal T_{fb}, which is fed back from the torque sensor 3, by the high frequency current command Id_{hfi}, which is input from the high frequency current command unit 45. The torque detection signal T_{fb} here is a vibration component of the torque extracted by the BPF 57, and this is input to the multiplier 64. The high frequency current command Id_{hfi} is to be superimposed on a d-axis of the motor 2, and the BPF 57 functions as a vibration component extraction unit that extracts the vibration component of the torque when the high frequency current command Id_{hfi} is superimposed on the d-axis.

The frequency that has been multiplied by the multiplier 64 becomes information indicating a phase error by averaging processing is performed thereon by the LPF 58. This is input to the subtracter 59 where an electric angular velocity is adjusted such that amplitude thereof becomes zero. Then, an estimated electric angular velocity ω^ₑ is derived by the PI controller 60. It is integrated by the integrator 61, whereby an estimated electric angle θ^ₑ is obtained. The estimated electric angle θ^ₑ that has been obtained is output to the three-phase/dq coordinate converter 55 of the current control unit 41. It is converted into the d-axis current value Id and the q-axis current value Iq on a rotating coordinate and is output to the ACR_{d} 51 and the ACR_{q} 52.

On the other hand, the estimated electric angular velocity ω^ₑ is input to the mechanical angle calculation unit 62 after noise thereof has been eliminated by the LPF 63, and is divided by the number of poles, whereby the estimated mechanical angular velocity ω^ₘ is derived. Then, the estimated mechanical angular velocity ω^ₘ is output to the subtracter 68 of the position/speed control unit 42.

Accordingly, the motor control device 4 according to this embodiment is capable of directly estimating the estimated mechanical angular velocity ω^ₘ of the motor 2. Note that by integrating this estimated mechanical angular velocity ω^ₘ, it is possible to obtain the estimated mechanical angle P^ₘ, and as a result, it is possible to estimate at least either of the speed or the position of the motor 2. Needless to say, it is also possible to obtain the speed and the position of the motor 2.

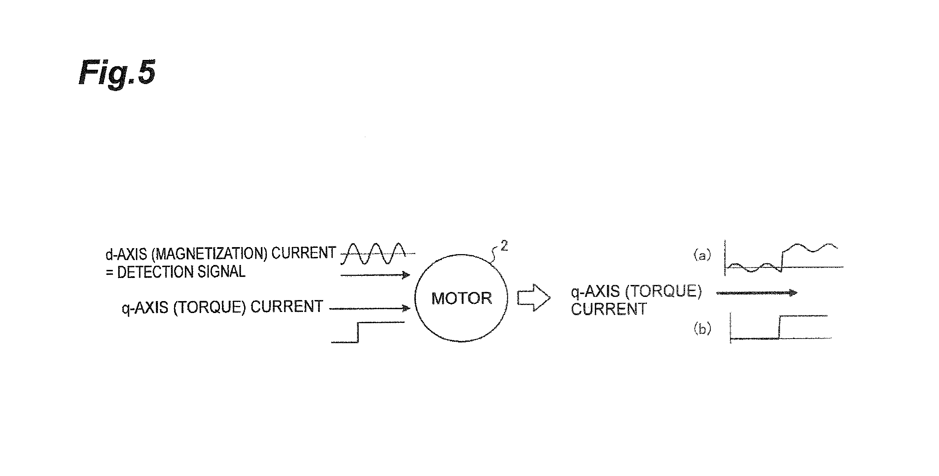

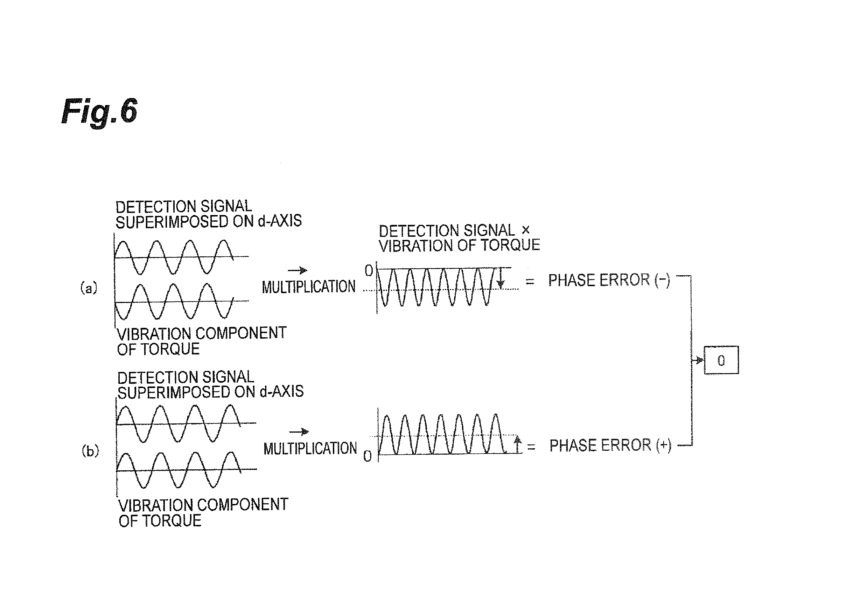

Here, a principle of speed estimation or position estimation by the estimation unit 43 is described with reference to FIGS. 5 and 6.

FIGS. 5 and 6 are explanatory diagrams illustrating the principle of estimation function by the estimation unit 43, which is provided to the motor control device 4.

As illustrated in FIG. 5, when a q-axis (torque) current command I^{*}q is input to a q-axis, the detection high frequency current command Id_{hfi}, which is a high frequency current command, is superimposed on the d-axis. When there is no error in the estimated electric angle θ^ₑ, the torque indicates a correct waveform as illustrated in (b). When there is an error in the estimated electric angle θ^ₑ, however, the torque vibrates as illustrated in (a) since a vibration component of the d-axis is superimposed on the torque. In this way, by using that the torque vibrates when the estimated electric angle θ^ₑ is shifted, the vibration component thereof is extracted by the BPF 57 (see FIGS. 3 and 4).

Also, as a relationship between the shift of the estimated electric angle θ^ₑ and vibration of the torque, in a case where the estimated electric angle θ^ₑ is delayed, the d-axis current and the vibration of the torque are in reverse phases as illustrated in FIG. 6(a). On the other hand, in a case where the estimated electric angle θ^ₑ is advanced, the d-axis current and the vibration of the torque are in the same phase as illustrated in FIG. 6(b).

Whether or not the estimated electric angle θ^ₑ is delayed or advanced can be determined by multiplying the high frequency current command Id_{hfi}, which is a detection signal superimposed on the d-axis, by the vibration component extracted by the BPF 57 (see FIG. 3). That is, the phase error indicated by a multiplication result of the detection signal and the vibration of the torque is expressed in a state of being offset in a positive or negative direction as illustrated.

As described above, in a case where the estimated electric angular velocity ω^ₑ is derived, the electric angular velocity is adjusted such that the amplitude of the phase error becomes zero. In this adjustment, in a case where a phase is delayed, the electric angular velocity is increased. Conversely, in a case where the phase is advanced, the electric angular velocity is decreased.

In this way, the estimated electric angular velocity ω^ₑ that is adjusted such that the amplitude of the phase error becomes zero, after being denoised by the LPF 63, is input to the mechanical angle calculation unit 62 and is divided by the number of poles, and then constitutes the estimated mechanical angular velocity ω^ₘ illustrated in FIGS. 3 and 4. By integrating this, it is possible to obtain the estimated mechanical angle P^ₘ (FIG. 4).

### (Another embodiment)

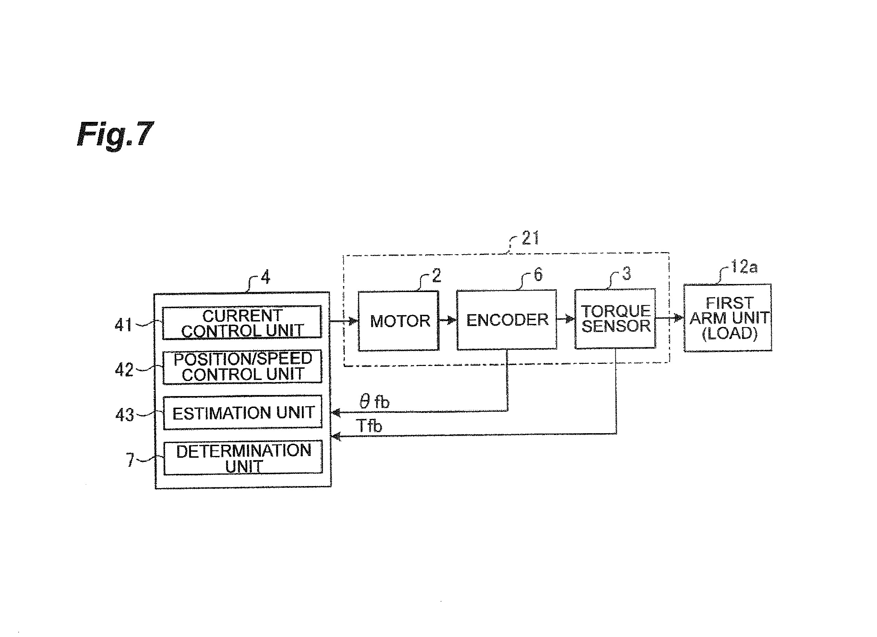

Here, another embodiment of a motor drive system is described. FIG. 7 is an explanatory diagram illustrating the motor drive system according to the other embodiment.

As illustrated, the motor drive system according to this embodiment is provided with an encoder 6 as a position detector that detects position of a motor 2 in addition to a torque sensor 3, and a motor control device 4 is provided with a determination unit 7 that determines whether or not the encoder 6 is in normal operation.

That is, while the determination unit 7 is monitoring operation of the encoder 6, an estimated mechanical angle P^ₘ, which is estimated and calculated based on a position detection signal from the encoder 6 and a torque detection signal T_{fb} from a position/speed control unit 42 are input to the determination unit 7. Then, by comparing the detection signal from the encoder 6 with the estimated mechanical angle P^ₘ from the position/speed control unit 42, the determination unit 7 is capable of determining there is encoder abnormality in a case where there is a difference of a predetermined value or greater.

In a case where there is no abnormality in the operation of the encoder 6, the position/speed control unit 42 may use the position detection signal from the encoder 6 as a position feedback signal and the torque detection signal T_{fb} from the torque sensor 3 as a torque compensation signal. On the other hand, in a case where the abnormality of the encoder 6 is determined, the position/speed control unit 42 may use the estimated mechanical angle P^ₘ as the position feedback signal.

In this configuration, during the normal operation, the motor control device 4 may control driving of the motor 2 based on the detection signal from the encoder 6 and performs torque compensation based on the torque detection signal T_{fb} from the torque sensor 3. On the other hand, when there is the abnormality of the encoder 6, it may allow an estimation unit 43 to estimate at least either of a speed or a position of the motor 2 based on the torque detection signal T_{fb} from the torque sensor 3.

In this configuration, even in a case where a failure occurs in the encoder 6 that has been used for motor control, the motor control can be performed based on the torque sensor 3. Therefore, it is possible to realize a fail-safe function of the motor drive system at a low cost. Furthermore, since it is possible to constantly perform the torque compensation in which a torque ripple caused by a motor structure and a reduction gear is directly detected and suppressed, improvement of operational performance of the motor drive system can be expected.

Next, a specific configuration of the torque sensor 3 provided to the above-described motor drive system is described. FIG. 7A is an explanatory diagram illustrating the torque sensor 3 in a front view, and

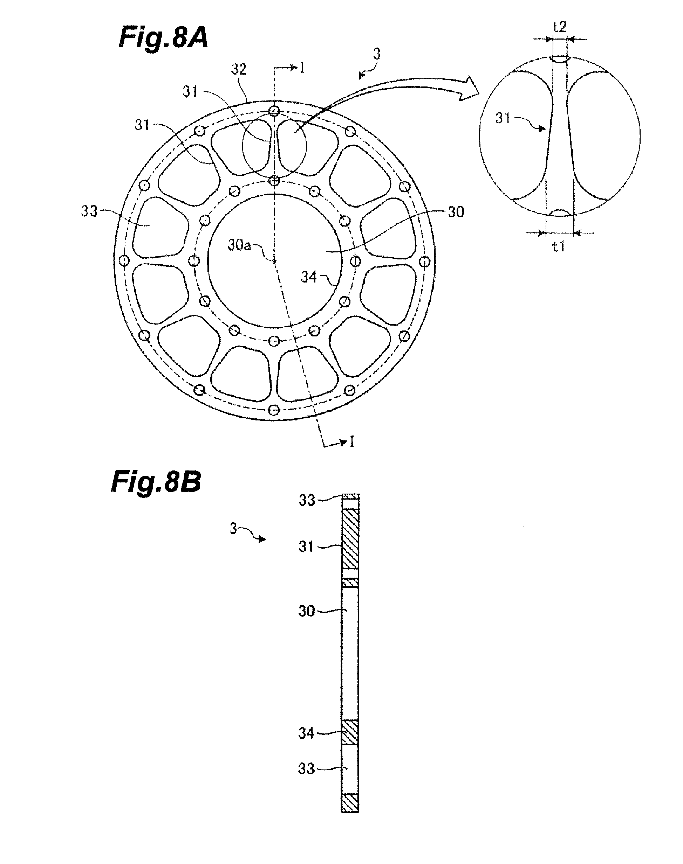

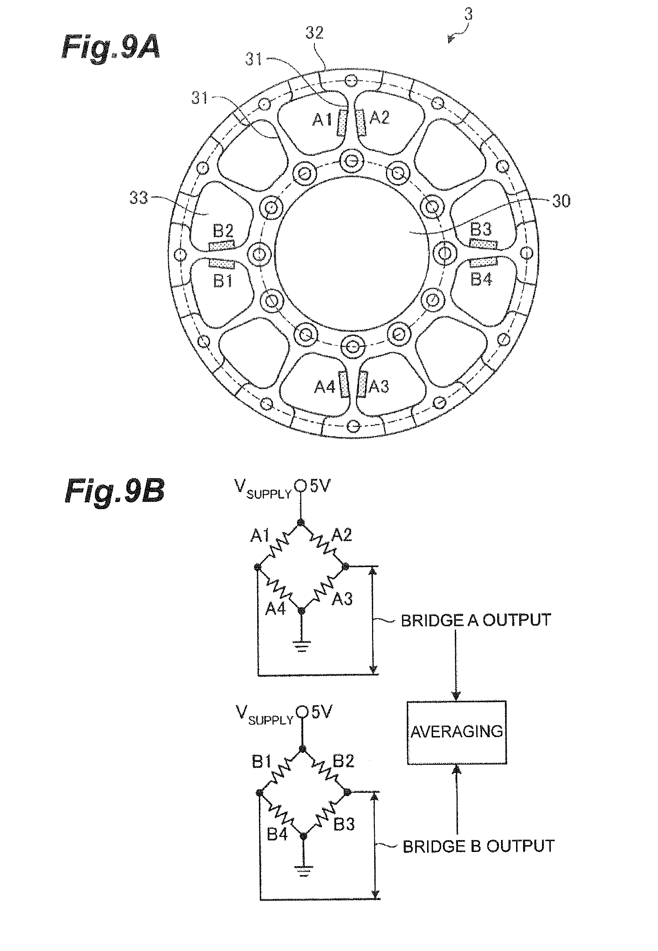

FIG. 8B is a sectional view along line I-I in FIG. 8A. FIG. 9A is an explanatory diagram illustrating one example of an attachment state of strain gages A1 to A4 and B1 to B4 to the torque sensor 3, and FIG. 9B is an explanatory diagram illustrating a bridge circuit assembled by the strain gages A1 to A4 and B1 to B4.

As illustrated in FIGS. 8A and 8B, the torque sensor 3 has a substantially disk-shaped external appearance having a predetermined thickness and diameter. Then, it is provided with a plurality of extending bodies 31 capable of being attached with the strain gages A1 to A4 and B1 to B4 and extending outward relative to an output shaft (not illustrated) of the motor 2 or an output shaft (not illustrated) of a reduction gear 5 interlockingly connected to the motor 2.

That is, as illustrated, in a circumferential direction of an inner ring-shaped body 34 forming a circular hole 30, into which the output shaft of the motor 2 or the reduction gear 5 is fitted, a base end of each of the plurality (e.g. twelve) of extending bodies 31 is provided at a regular interval from each other and radially extending from a center 30a of the circular hole 30. Then, each of tips of the extending bodies 31 are connected to an outer ring-shaped body 32. Note that it is not always necessary that the outer ring-shaped body 32 be provided; however, by connecting the extending bodies 31 to the outer ring-shaped body 32, it is possible to constitute a more robust torque sensor 3.

All of the strain gages A1 to A4 and B1 to B4 have the same configuration and, as illustrated in FIG. 9A, are provided to both sides of each of two pairs of the extending bodies 31, which are 180 degrees apart and line symmetric to each other. That is, a pair of the strain gages A1 and A2 is disposed to both sides of one extending body 31, and a pair of the strain gages A3 and A4 is disposed to both sides of an opposing extending body 31. Then, the strain gages B1 to B4 are similarly disposed to another pair of the extending bodies 31 and 31. In this way, each of the strain gages A1 to A4 and B1 to B4 is disposed in a so-called orthogonal arrangement.

By the strain gages A1 to A4 and the strain gages B1 to B4 constituting the bridge circuit as illustrated in FIG. 9B, it is possible to obtain an average of a bridge A output of the strain gages A1 to A4 and a bridge B output of the strain gages B1 to B4, whereby it is possible to decrease an influence of an output error on each of the bridges.

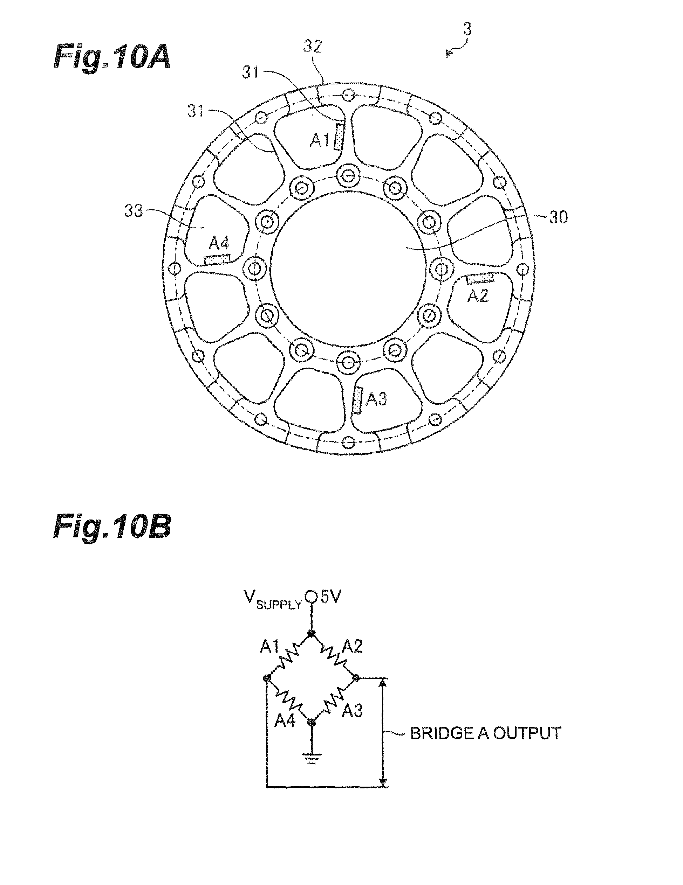

By the way, it is also possible to configure the torque sensor 3 in an orthogonal arrangement as illustrated in FIG. 10A and to constitute a bridge circuit as illustrated in FIG. 10B. FIG. 10A is an explanatory diagram illustrating another example of the attachment state of the strain gages to the torque sensor 3, and FIG. 10B is an explanatory diagram illustrating the bridge circuit assembled by the strain gages A1 to A4.

That is, four strain gages A1 to A4 (or B1 to B4) are provided to four extending bodies 31, respectively, at an interval of 90 degrees. Here, each of pairs of the strain gage A1 and the strain gage A2 as well as the strain gage A3 and the strain gage A4 is disposed so as to be positioned on one side and the other side of the extending body 31. The torque sensor 3 according to this configuration is also capable of detecting torque of the motor 2 without any problem.

By the way, to the above-described disk-shaped torque sensor 3, a space 33 surrounded by each of the extending bodies 31, the outer ring-shaped body 32, and the inner ring-shaped body 34 is formed. By using this space 33, for example, it is possible to provide a substrate (not illustrated) having a terminal and the like enabling connection with a strain gage A amplifier and a power supply, AD conversion, and communication with outside.

As illustrated in FIG. 8A, the extending body 31 is formed to be gradually tapered toward the tip according to a distance in a radial direction from the center of the output shaft. For example, a tip portion width t2 of the extending body 31 is approximately 1/2 of a base end portion width t1. Note that in a case where each of the extending bodies 31 is formed to be tapered, it may be formed to be inversely proportional to the distance from the center 30a of the circular hole 30 or it may be formed by changing a reduction ratio as appropriate from a base end side to a tip side (e.g. by increasing the reduction ratio from the base end side to the middle).

The width of the extending body 31 is to be thinner than at least a thickness of the torque sensor 3. For example, it is preferred that the maximum width of the extending body 31 (here, the base end portion width t1) be set to less than 1/2 or not more than 1/2 of the thickness of the extending body 31, the outer ring-shaped body 32, and the inner ring-shaped body 34. Note that a dimension ratio and the like of the width and the thickness may be set as appropriate considering sensitivity and the like of the strain gages A1 to A4 and B1 to B4. In this configuration, when attaching the strain gages A1 to A4 (B1 to B4) to the extending body 31, torque detection can be performed easily and securely without any strict alignment and the like. In this configuration, it is also possible to output a torque detection signal having high sensitivity to a high frequency current command to be superimposed on a d-axis.

As for the above-described arrangement position of the torque sensor 3, for example, when an object to be driven by the motor 2 is a movable member and a member interlockingly connected to this movable member is relatively a fixed member, the torque sensor 3 can be attached to this fixed member. Then, the motor 2 can be attached to the movable member.

As described above, since the torque sensor 3 is provided with the outer ring-shaped body 32 to which each of the tips of the plurality of extending bodies 31 is connected, it is preferred that the torque sensor 3 be fixed to the fixed member through the outer ring-shaped body 32. In this way, by attaching the torque sensor 3 to the fixed member and the motor 2 to the movable member, the torque sensor 3 is capable of effectively performing the torque detection through the outer ring-shaped body 32 by using a reaction force of a driving force of the motor 2.

The fixed member and the movable member are relative. For example, in the robot 1 illustrated in FIG. 1, when the base 10 is the fixed member, the body unit 11 is the movable member, while when the body unit 11 is the fixed member, a first arm unit 12a is the movable member. Similarly, when the first arm unit 12a is the fixed member, a wrist unit 13 is the movable member.

As described above, the motor drive system according to the above-described embodiment is provided with the motor control device 4 having the estimation unit 43 that estimates at least either of the speed or the position based on the torque detection signal T_{fb} detected by the torque sensor 3, which is provided between the motor 2 and the movable member to be a load. The estimation unit 43 of the motor control device 4 is capable of receiving a high frequency current command Id_{hfi} from a high frequency current command unit 45and is capable of estimating at least either of the speed or the position of the motor 2 based on the high frequency current command Id_{hfi} and the torque detection signal T_{fb}.

Therefore, according to the motor drive system of this embodiment, it is possible to improve environment resistance and to significantly decrease the torque ripple and the like while it is not necessary to use a costly position sensor and the like, whereby it is possible to reduce costs of the motor drive system.

The motor drive system of this embodiment can be applied regardless of a type of a permanent magnet of the motor 2 whether it is an embedded type or a surface installation type. Therefore, for example, a high power-density surface permanent magnet motor (SPMM) in which a permanent magnet is laminated on a surface of a rotor may be used, and use of which may also contribute to downsizing of the motor 2.

By the way, in the above-described embodiment, an example has been described in which the motor drive system is applied to the robot 1; however, it may be applied to everything that is driven by the motor 2. It is also possible to change a specific configuration and the like of the torque sensor 3 as appropriate.

Note that further effects and modifications may be easily derived by those skilled in the art. Accordingly, a broader aspect of the present invention is not to be limited to specific details and representative embodiments expressed and described as above. Therefore, various changes are possible without deviating from a spirit or a scope of an overall concept of the present invention defined by the attached claims and equivalents thereof.

### Reference Signs List

- 2:: motor
- 3:: torque sensor
- 4:: motor control device
- 5:: reduction gear
- 6:: encoder (position detector)
- 31:: extending body
- 32:: outer ring-shaped body
- 43:: estimation unit
- 55:: dq coordinate converter (coordinate conversion unit)

## Claims

1. A motor drive system comprising:
a motor;
a torque sensor provided between the motor and a load; and
a motor control device configured to control driving of the motor, wherein
the motor control device includes an estimation unit configured to estimate at least either of a speed or a position of the motor based on a torque detection signal detected by the torque sensor.

2. The motor drive system according to claim 1, further comprising:
a high frequency current command unit configured to generate a high frequency current command to be superimposed on an output current to the motor, wherein
the estimation unit of the motor control device is configured to estimate at least either of the speed or the position of the motor based on the high frequency current command and the torque detection signal.

3. The motor drive system according to claim 2, wherein
the motor control device is provided with a coordinate conversion unit configured to calculate a d-axis component and a q-axis component of a d-q axes rotating coordinate system synchronized with the motor and configured to derive a d-axis current and a q-axis current, and
the estimation unit is
provided with a vibration component extraction unit configured to extract a vibration component of the q-axis current when the high frequency current command is superimposed on a d-axis, and
configured to estimate at least either of the speed or the position of the motor based on a multiplication result of the vibration component extracted by the vibration component extraction unit and the high frequency current command superimposed on the d-axis.

4. The motor drive system according to claim 1, 2, or 3, wherein
the torque sensor is integrally configured with the motor or a reduction gear interlockingly connected to the motor.

5. The motor drive system according to any one of claims 1 to 4, wherein
the torque sensor is provided with a plurality of extending bodies capable of being attached with a strain gage and extending outward relative to an output shaft of the motor or an output shaft of the reduction gear interlockingly connected to the motor.

6. The motor drive system according to claim 5, wherein
the extending body is formed to be gradually tapered toward a tip according to a distance in a radial direction from a center of the output shaft.

7. The motor drive system according to claim 5 or 6, further comprising:
a fixed member and a movable member that are interlockingly connected to each other, wherein
the fixed member is attached with the torque sensor through a ring-shaped body to which each of the tips of the plurality of the extending bodies is connected, and the movable member is attached with the motor.

8. The motor drive system according to any one of claims 1 to 7, further comprising:
a position detector configured to detect the position of the motor, wherein
the motor control device is
during normal operation, configured to control the driving of the motor based on a detection signal of the position detector and to perform torque compensation based on the torque detection signal of the torque sensor, and
when there is abnormality in the position detector, configured to cause the estimation unit to estimate at least either of the speed or the position of the motor based on the detection signal of the torque sensor.

9. A motor control device comprising:
an estimation unit configured to estimate at least either of the speed or a position based on a torque detection signal detected by a torque sensor provided between a motor and a load.

10. The motor control device according to claim 9, wherein
the estimation unit of the motor control device is capable of receiving a high frequency current command from a high frequency current command unit and is configured to estimate at least either of the speed or the position of the motor based on the high frequency current command and the torque detection signal.
